# FASCICULE DE BREVET EUROPEEN

(11) **EP 2 794 748 B1**
(45) Date de publication et mention de la délivrance du brevet: **27.06.2018**
(21) Numéro de dépôt: 12812582.0
(22) Date de dépôt: 17.12.2012
(51) Int. Cl.: C08K 5/17, B60C 1/00, C08L 9/06

(54) **PNEUMATIQUE COMPRENANT UNE COMPOSITION ESSENTIELLEMENT DEPOURVUE DE DERIVE GUANIDIQUE ET COMPRENANT UNE AMINE PRIMAIRE**
LUFTREIFEN AUS EINER GUANIDINDERIVAT-FREIEN UND EINEM PRIMÄREN AMIN ENTHALTENDEN ZUSAMMENSETZUNG
TYRE COMPRISING A COMPOSITION ESSENTIALLY FREE OF GUANIDINE DERIVATIVES AND COMPRISING A PRIMARY AMINE

(30) Priorité: 21.12.2011 FR 1162181
(43) Date de publication de la demande: 29.10.2014
(73) Titulaire: Compagnie Générale des Etablissements Michelin, 63000 Clermont-Ferrand (FR)
(72) Inventeur: DARNAUD, Christelle, F-63040 Clermont-Ferrand Cedex 9 (FR); LONGCHAMBON, Karine, F-63040 Clermont-Ferrand Cedex 9 (FR)
(74) Mandataire: Sidhu, Alban
(86) Numéro de dépôt international: PCT/EP2012/075850
(87) Numéro de publication internationale: WO 2013/092523

(56) Documents cités:
- WO-A1-02/31041
- JP-A- 2000 017 107
- JP-A- 2000 053 806
- JP-A- 2004 051 869
- Bernard C. Barton: "Use of Oxidizing Agents in Rubber Vulcanization - Zinc Oxide-free Process", Industrial and Engineering Chemistry, vol. 42, no. 4 1 avril 1950 (1950-04-01), pages 671-674, XP055033912, Extrait de l'Internet: URL:http://pubs.acs.org/doi/pdf/10.1021/ie 50484a032 [extrait le 2012-07-26]
- HAMED G R ET AL: "EFFECT OF HYDROCARBON AND AMINE DILUENTS ON THE PROPERTIES OF DICUMYL PEROXIDE CURED STYRENE-BUTADIENE RUBBER. ÖPART 1: GUM COMPOSITIONS", RUBBER CHEMISTRY AND TECHNOLOGY, AMERICAN CHEMICAL SOCIETY, RUBBER DIVISION, US, vol. 68, no. 2, 1 mai 1995 (1995-05-01), pages 212-218, XP000517237, ISSN: 0035-9475

## Description

L'invention est relative aux pneumatiques et plus particulièrement à ceux dont la composition comprend une amine primaire.
Depuis que les économies de carburant et la nécessité de protéger l'environnement sont devenues une priorité, il s'est avéré nécessaire de produire des pneumatiques ayant une résistance au roulement réduite, sans pénalisation des autres propriétés du pneumatique. Les manufacturiers ont développé des compositions de pneumatique permettant de diminuer cette résistance au roulement, notamment par l'introduction de silice dans les mélanges comme charge renforçante.
Néanmoins, les manufacturiers cherchent toujours des solutions pour baisser encore la résistance au roulement des pneumatiques et c'est dans ce cadre que les demanderesses ont découvert de façon surprenante que l'introduction d'une amine primaire en remplacement des dérivés guanidiques permet de diminuer l'hystérèse des compositions de caoutchouc diénique comportant de la silice comme charge renforçante majoritaire.
Par ailleurs, cette solution présente de nombreux autres avantages par rapport aux compositions de l'art antérieur et notamment l'utilisation d'un composé de moindre coût et permettant une amélioration de l'empreinte environnementale.

Des amines primaires ont déjà été utilisées dans des compositions de pneumatique différentes de celles de l'invention et à d'autres fins que celle de réduire l'hystérèse des compositions. Par exemple, le document JP 2000-017107 décrit l'utilisation d'alkylamines de faibles masses molaires pour améliorer la processabilité d'un mélange d'élastomère diénique et de silice, en présence de diphénylguanidine (DPG). Egalement, le document EP 2241592 décrit l'utilisation d'un faible taux d'alkylamine (0,25 pce) dans un mélange comprenant du noir de carbone et du caoutchouc naturel majoritairement.
Néanmoins ces amines primaires n'ont jamais été utilisées comme proposé par les demanderesses pour remplacer les dérivés guanidiques dans les mélanges d'élastomères diéniques comportant de la silice comme charge majoritaire, avec les avantages présentés ci-dessus.

L'invention concerne donc un pneumatique comprenant une composition de caoutchouc à base d'au moins un élastomère diénique, une charge renforçante comprenant majoritairement de la silice, un système de réticulation, ladite composition étant dépourvue ou comprenant moins de 0,3 pce de dérivé guanidique et comprenant en outre une amine primaire de formule (I) :

R-NH₂ (I)

dans laquelle R représente un groupement hydrocarboné linéaire ou ramifié comprenant de 8 à 24 atomes de carbone.

Préférentiellement également, l'invention concerne un pneumatique tel que défini ci-dessus, dans lequel le taux d'amine primaire est de 0,2 à 8 pce, de préférence de plus de 0,3 pce à 7 pce. Plus préférentiellement le taux d'amine primaire est de 0,5 à 5 pce, de préférence de plus de 0,6 pce à 4 pce.

Plus préférentiellement, l'invention concerne un pneumatique tel que défini ci-dessus, dans lequel l'amine primaire de formule (I) porte un radical R qui représente un groupement hydrocarboné comprenant de 10 à 22 atomes de carbone. Plus préférentiellement, R représente un groupement hydrocarboné comprenant de 12 à 20 atomes de carbone et de préférence de 14 à 20 atomes de carbone. Encore plus préférentiellement, l'amine primaire de formule (I) porte un radical R qui représente un hydrocarboné linéaire. De préférence, le groupement R représente un groupement alkyle ou un groupement alkényle.

De manière préférentielle, l'invention concerne un pneumatique tel que défini ci-dessus, dans lequel le taux de silice est de 30 à 150 pce.

De manière préférentielle également, l'invention concerne un pneumatique tel que défini ci-dessus, dans lequel la charge renforçante comprend du noir de carbone, à titre minoritaire. Préférentiellement, le taux de noir de carbone est de 0,5 à 50 pce.

De manière plus préférentielle, l'invention concerne un pneumatique tel que défini ci-dessus, dans lequel l'élastomère diénique est choisi dans le groupe constitué par les polybutadiènes, les polyisoprènes de synthèse, le caoutchouc naturel, les copolymères de butadiène, les copolymères d'isoprène (tels que les copolymères de butadiène-styrène, les copolymères d'isoprène-butadiène, les copolymères d'isoprène-styrène ou les copolymères d'isoprène-butadiène-styrène) et les mélanges de ces élastomères.

Selon un mode préférentiel, l'invention concerne un pneumatique tel que défini ci-dessus, dans lequel l'élastomère diénique est composé majoritairement d'élastomère diénique non isoprénique.

Préférentiellement, l'invention concerne un pneumatique tel que défini ci-dessus, dans lequel l'élastomère diénique est composé de 100 pce d'élastomère diénique non isoprénique.

Préférentiellement également, l'invention concerne un pneumatique tel que défini ci-dessus, dans lequel l'élastomère diénique non isoprénique est choisi dans le groupe constitué par les polybutadiènes, les copolymères de butadiène, les copolymères d'isoprène (tels que les copolymères de butadiène-styrène, les copolymères d'isoprène-butadiène, les copolymères d'isoprène-styrène ou les copolymères d'isoprène-butadiène-styrène) et les mélanges de ces élastomères.

Plus préférentiellement, l'invention concerne un pneumatique tel que défini ci-dessus, dans lequel la composition comprend en outre un plastifiant, de préférence choisi parmi les résines plastifiantes, les huiles d'extension et leurs mélanges.

Préférentiellement, l'invention concerne un pneumatique tel que défini ci-dessus, dans lequel le taux de plastifiant est de 5 à 100 pce.

De manière préférentielle, l'invention concerne un pneumatique tel que défini ci-dessus, dans lequel la composition est en outre dépourvue de zinc ou en contient moins de 0,5 pce, préférentiellement moins de 0,3 pce.

De manière préférentielle également, l'invention concerne un pneumatique tel que défini ci-dessus, comprenant en outre un agent de couplage.

Préférentiellement, l'invention concerne un pneumatique tel que défini ci-dessus dans lequel l'agent de couplage est un polysulfure d'hydroxysilane répondant à la formule générale (III) :

(HO)ₐ R₍₃₋ₐ₎Si-R'-Sₓ-R'-SiR_{(3-b)}(OH)_{b} (III)

dans laquelle :
- les radicaux R, identiques ou différents, sont des groupes hydrocarbonés comportant de préférence de 1 à 15 atomes de carbone;
- les radicaux R', identiques ou différents, sont des groupes de liaison divalents comportant de préférence de 1 à 18 atomes de carbone;
   a et b, identiques ou différents, sont égaux à 1 ou 2;
- x est un nombre supérieur ou égal à 2.

Plus préférentiellement, l'invention concerne un pneumatique tel que défini ci-dessus dans lequel l'agent de couplage est un mono-hydroxysilane dans lequel a et b sont égaux à 1.

Plus préférentiellement encore, l'invention concerne un pneumatique tel que défini ci-dessus dans lequel les radicaux R sont choisis parmi les alkyles linéaires ou ramifiés en C₁-C₆, les cycloalkyles en C₅-C₈ ou un radical phényle ; les radicaux R' sont choisis parmi les alkylènes en C₁-C₁₈ ou les arylènes en C₆-C₁₂. Plus particulièrement, les radicaux R sont choisis parmi les alkyles en C₁-C₆ et les radicaux R' parmi les alkylènes en C₁-C₁₀.

Très préférentiellement, l'invention concerne un pneumatique tel que défini ci-dessus dans lequel l'hydroxysilane est un polysulfure de mono-hydroxysilane de formule (IV): 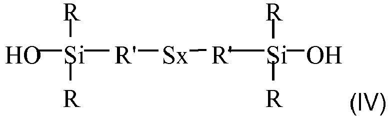 dans laquelle les radicaux R sont des alkyles en C₁-C₃, de préférence le méthyle ; les radicaux R' des alkylènes en C₁-C₄, de préférence méthylène, éthylène ou propylène ; x est supérieur ou égal à 2. Plus particulièrement, l'hydroxysilane est un polysulfure de bis- (propyldiméthylsilanol) de formule particulière (IVa):

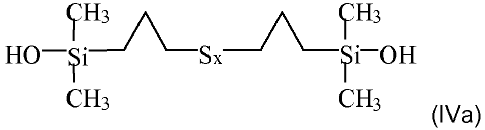

Préférentiellement, l'invention concerne un pneumatique tel que défini ci-dessus, dans lequel la composition comprenant l'amine primaire est la composition d'une couche de pneumatique choisie dans le groupe constitué de tout ou partie de la bande de roulement, de tout ou partie de la ceinture de pneumatique et leurs combinaisons.

Préférentiellement, l'invention concerne un pneumatique tel que défini ci-dessus, dans lequel la composition comprenant l'amine primaire est celle de tout ou partie de la bande de roulement.

Le pneumatique selon l'invention pourra comporter la composition décrite ci-dessus dans une ou plusieurs de ses différentes couches, telles que par exemple la bande de roulement, les nappes de la ceinture de pneumatique, la nappe carcasse ou tout autre couche. Au sens de la présente demande, la bande de roulement de pneumatique désigne la couche de caoutchouc au contact du sol, toute entière (c'est-à-dire sur toute son épaisseur) ou une partie de cette dernière (incluant la sous-couche), notamment lorsqu'elle est composée de plusieurs couches.

Préférentiellement, l'invention concerne un pneumatique tel que défini ci-dessus dans lequel la composition comprenant l'amine primaire est la composition d'une couche de pneumatique choisie dans le groupe constitué de tout ou partie de la bande de roulement, de tout ou partie de la ceinture de pneumatique et leurs combinaisons

De manière préférentielle, l'invention concerne un pneumatique tel que défini ci-dessus dans lequel la composition précisée est celle de tout ou partie de la bande de roulement.

Préférentiellement, le pneumatique selon l'invention sera choisi parmi les pneumatiques destinés à équiper un véhicule à deux roues, un véhicule de tourisme, ou encore un véhicule dit « poids lourd » (c'est-à-dire métro, bus, véhicules hors-la-route, engins de transport routier tels que camions, tracteurs, remorques), ou encore des avions, des engins de génie civil, agraire, ou de manutention.

### I- Constituants de la composition

Les compositions de caoutchouc selon l'invention sont à base des constituants suivants: au moins un élastomère diénique, une charge renforçante, un système de réticulation, et une amine primaire.

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en oeuvre pour l'invention peuvent être différentes à l'état non réticulé et à l'état réticulé.

Dans la présente description, sauf indication expresse différente, tous les pourcentages (%) indiqués sont des pourcentages en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### I-1 Elastomère diénique

Les compositions peuvent contenir un seul élastomère diénique ou un mélange de plusieurs élastomères diéniques.

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Les élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles); c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions selon l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778, US 6 013 718 et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909, US 6 503 973, WO 2009/000750 et WO 2009/000752). Comme autres exemples d'élastomères fonctionnalisés, on peut citer également des élastomères (tels que SBR, BR, NR ou IR) du type époxydés.
Ces élastomères fonctionnalisés peuvent être utilisés en coupage entre eux ou avec des élastomères non fonctionnalisés. Par exemple, on peut utiliser un élastomère fonctionnalisé silanol ou polysiloxane ayant une extrémité silanol, en mélange avec un élastomère couplés et/ou étoilés à l'étain (décrit dans WO 11/042507), ce dernier représentant un taux compris de 5 à 50%, par exemple de 25 à 50%.
Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse, Tg, mesurée selon ASTM D3418) comprise entre 0°C et -70°C et plus particulièrement entre -10°C et -60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de -40°C à -80°C, les copolymères isoprène-styrène et notamment ceux ayant une teneur en styrène comprise entre 5% et 50% en poids et une Tg comprise entre -5°C et -60°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre -20°C et -70°C.

En résumé, l'élastomère diénique de la composition est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères de butadiène-acrylonitrile (NBR), les copolymères de butadiène-styrène-acrylonitrile (NSBR) ou un mélange de deux ou plus de ces composés.

Selon un mode de réalisation particulier, la composition comporte de 50 à 100 pce d'un élastomère SBR, qu'il s'agisse d'un SBR préparé en émulsion ("ESBR") ou d'un SBR préparé en solution ("SSBR").

Selon un autre mode particulier de réalisation, l'élastomère diénique est un coupage (mélange) SBR/BR.

Selon d'autres modes de réalisation possibles, l'élastomère diénique est un coupage SBR/NR (ou SBR/IR), BR/NR (ou BR/IR), ou encore SBR/BR/NR (ou SBR/BR/IR).

Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre -10°C et -55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique est un élastomère majoritairement isoprénique (c'est-à-dire dont la fraction massique d'élastomère isoprénique est la plus grande, comparée à la fraction massique des autres élastomères). Par "élastomère isoprénique", on entend de manière connue un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Préférentiellement, selon un autre mode de réalisation, la composition de caoutchouc comprend de façon majoritaire (c'est-à-dire avec le taux massique le plus élevé), un élastomère diénique non isoprénique. Par « élastomère diénique non isoprénique », doit être compris au sens de la présente demande un élastomère issu au moins en partie (i.e., un homopolymère ou un copolymère) de monomères diènes (monomères porteurs de deux doubles liaisons carbone-carbone) autres que l'isoprène. Ainsi, les élastomères diéniques non isopréniques au sens de la présente définition, comprennent donc également des copolymères comprenant de l'isoprène à titre de co-monomère. Le caoutchouc naturel et les homopolymères isopréniques (c'est-à-dire constitués de monomères isoprène fonctionnalisés ou non) sont exclus de la présente définition. Selon ce mode préférentiel de réalisation, tous les élastomères cités précédemment à l'exception du caoutchouc naturel et des polyisoprènes conviennent à titre d'élastomère diénique non isoprénique. Notamment, on pourra utiliser les élastomères diéniques non isopréniques choisis préférentiellement dans le groupe des élastomères diéniques fortement insaturés constitué par les polybutadiènes (en abrégé "BR"), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR). Toujours selon ce mode de réalisation préférentiel, on comprendra qu'en cas de coupage d'élastomères, le taux total des élastomères dits « non isopréniques » doit être supérieur au taux total des élastomères choisis dans le groupe constitué par le caoutchouc naturel, les polyisoprènes de synthèse et leurs mélanges. Préférentiellement selon ce mode de réalisation, le taux d'élastomère diénique non isoprénique est de plus de 50 pce, plus préférentiellement d'au moins 60 pce, de manière plus préférentielle d'au moins 70 pce, plus préférentiellement encore d'au moins 80 pce et de manière très préférentielle d'au moins 90 pce. En particulier selon ce mode de réalisation, le taux d'élastomère diénique non isoprénique est très préférentiellement de 100 pce.

Selon un autre mode préférentiel de réalisation de l'invention, la composition de caoutchouc comprend un coupage d'un (un ou plusieurs) élastomère diénique dit "à haute Tg" présentant une Tg comprise entre -70°C et 0°C et d'un (un ou plusieurs) élastomère diénique dit "à basse Tg" comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple entre 30 et 90 pce, en particulier entre 40 et 90 pce, d'un élastomère à haute Tg en coupage avec un élastomère à basse Tg.

Selon un autre mode particulier de réalisation de l'invention, l'élastomère diénique de la composition selon l'invention comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

### I-2 Charge renforçante

Le pneumatique selon l'invention comprend une composition qui contient, à titre majoritaire de la silice comme charge renforçante. Par charge renforçante majoritaire, on entend celle qui présente le plus fort taux parmi les charges renforçantes présentes dans la composition. Notamment, on entend par charge renforçante majoritaire toute charge renforçante qui représente au moins 50% en poids des charges renforçantes présentes, préférentiellement plus de 50% et plus préférentiellement plus de 60%.

L'état physique sous lequel se présente la charge renforçante est indifférent, que ce soit sous forme de poudre, de microperles, de granulés, de billes ou toute autre forme densifiée appropriée.

La fraction volumique de charge renforçante dans la composition de caoutchouc est définie comme étant le rapport du volume de la charge renforçante sur le volume de l'ensemble des constituants de la composition, étant entendu que le volume de l'ensemble des constituants est calculé en additionnant le volume de chacun des constituants de la composition. La fraction volumique de charge renforçante dans une composition est donc définie comme le rapport du volume de la charge renforçante sur la somme des volumes de chacun des constituants de la composition, typiquement, cette fraction volumique est comprise entre 10 % et 30 %, préférentiellement entre 15 % et 25%. D'une manière préférentielle équivalente, le taux de charge renforçante totale (noir de carbone et/ou charge inorganique renforçante telle que silice) est de 30 à 200 pce, plus préférentiellement de 30 à 150 pce et de manière très préférentielle, de 50 à 135 pce.

Selon un mode de réalisation préférentiel de l'invention, on utilise une charge renforçante comportant de 30 à 150 pce de silice, plus préférentiellement de 50 à 130 pce de silice, et optionnellement du noir de carbone ; le noir de carbone, lorsqu'il est présent, est utilisé en combinaison à la silice plus préférentiellement à un taux de 0,5 à 50 pce, encore plus préférentiellement de 1 à 20 pce (notamment entre 1 et 10 pce).

La composition peut contenir un type de silice ou un coupage de plusieurs silices. La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices « Ultrasil 7000 » et « Ultrasil 7005 » de la société Degussa, les silices « Zeosil » 1165MP, 1135MP et 1115MP de la société Rhodia, la silice « Hi-Sil EZ150G » de la société PPG, les silices « Zeopol » 8715, 8745 et 8755 de la Société Huber, des silices précipitées traitées telles que par exemple les silices "dopées" à l'aluminium décrites dans la demande EP-A-0735088 ou les silices à haute surface spécifique telles que décrites dans la demande WO 03/16837.

La silice a de préférence une surface BET comprise entre 45 et 400 m²/g, plus préférentiellement comprise entre 60 et 300 m²/g.

Ces compositions peuvent optionnellement également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des acides gras, des polyéthers, des amines primaires, secondaires ou tertiaires, des polyorganosiloxanes hydroxylés ou hydrolysables.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (II) suivante:

(II) Z - A - Sₓ - A - Z ,

dans laquelle:
- x est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 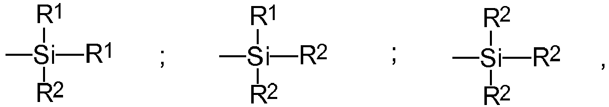 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (II) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera également les POS (polyorganosiloxanes) bifonctionnels ou encore des polysulfures d'hydroxysilane (R² = OH dans la formule II ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

En particulier, et de manière préférentielle, l'agent de couplage peut être un polysulfure d'hydroxysilane (tel que décrit dans les documents cités ci-dessus) répondant à la formule générale (III):

(HO)ₐ R₍₃₋ₐ₎ Si-R'-Sₓ-R'-SiR_{(3-b)}(OH)_{b} (III)

dans laquelle :
- les radicaux R, identiques ou différents, sont des groupes hydrocarbonés comportant de préférence de 1 à 15 atomes de carbone;
- les radicaux R', identiques ou différents, sont des groupes de liaison divalents comportant de préférence de 1 à 18 atomes de carbone;
- a et b, identiques ou différents, sont égaux à 1 ou 2;
- x est un nombre supérieur ou égal à 2.

Les radicaux R, identiques ou différents, linéaires ou ramifiés, comportant de préférence de 1 à 15 atomes de carbone, sont plus préférentiellement choisis parmi les alkyles, cycloalkyles ou aryles, en particulier parmi les alkyles en C₁-C₆, les cycloalkyles en C₅-C₈ et le radical phényle. Parmi ces radicaux, on citera notamment, à titre d'exemples, ceux choisis dans le groupe constitué par méthyle, éthyle, n-propyle, iso-propyle, n-butyle, sec-butyle, tert-butyle, n-pentyle, néopentyle, n-hexyle, 2-éthylhexyle, n-octyle, iso-octyle, cyclopentyle, cyclohexyle, 2-méthylcyclohexyle, phényle, toluyle, benzyle.

Plus préférentiellement encore, les radicaux R, identiques ou différents, sont des alkyles en C₁-C₃ (à savoir méthyle, éthyle, n-propyle, iso-propyle), tout particulièrement choisis parmi méthyle et éthyle.

Les radicaux R', identiques ou différents, substitués ou non substitués, sont de préférence des radicaux hydrocarbonés, saturés ou non saturés, comportant de 1 à 18 atomes de carbone, ces radicaux R' pouvant être interrompus au sein de la chaîne hydrocarbonée par au moins un hétéroatome tel que O, S ou N. Conviennent notamment des groupements alkylène en C₁-C₁₈ ou des groupements arylène en C₆-C₁₂, plus particulièrement des alkylènes en C₁-C₁₀, notamment en C₁-C₄, en particulier ceux choisis parmi méthylène, éthylène et propylène.

De préférence dans les polysulfures d'hydroxysilane répondant à la formule générale (III), l'hydroxysilane est un mono-hydroxysilane c'est-à-dire que a et b sont égaux à 1. De préférence également, les radicaux R sont choisis parmi les alkyles linéaires ou ramifiés en C₁-C₆, les cycloalkyles en C₅-C₈ ou un radical phényle ; les radicaux R' sont choisis parmi les alkylènes en C₁-C₁₈ ou les arylènes en C₆-C₁₂, et plus particulièrement, les radicaux R sont choisis parmi les alkyles en C₁-C₆ et les radicaux R' parmi les alkylènes en C₁-C₁₀.

Ainsi, de manière très préférentielle, l'hydroxysilane est un polysulfure de mono-hydroxysilane de formule (IV): 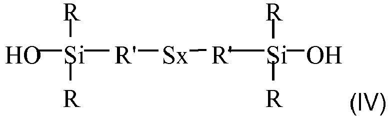 dans laquelle les radicaux R sont des alkyles en C₁-C₃, de préférence le méthyle ; les radicaux R' des alkylènes en C₁-C₄, de préférence méthylène, éthylène ou propylène ; x est supérieur ou égal à 2. Plus particulièrement, l'hydroxysilane peut être un polysulfure de bis- (propyldiméthylsilanol) de formule particulière (IVa): 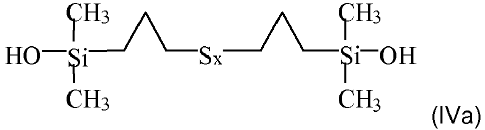 Ce produit de formule (IVa) correspond au produit D dans le document précédemment cité WO 02/31041 (ou US 2004/051210).

Dans les compositions de caoutchouc conformes à l'invention, la teneur en agent de couplage est préférentiellement comprise entre 2 et 15 pce, plus préférentiellement entre 3 et 13 et encore plus préférentiellement entre 5 et 10 pce.
On peut utiliser en complément de la silice tout type de charge renforçante connue pour ses capacités à renforcer une composition de caoutchouc utilisable pour la fabrication de pneumatiques, par exemple une charge organique tel que du noir de carbone, une charge inorganique renforçante telle que de l'alumine, ou encore un coupage de ces deux types de charge.

Comme noirs de carbone conviennent tous les noirs de carbone, notamment les noirs dits de grade pneumatique. Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).
Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

### I-3 Système de réticulation

Le système de réticulation peut être un système de vulcanisation, il est préférentiellement à base de soufre ou de donneurs de soufre et d'accélérateur primaire de vulcanisation (préférentiellement 0,5 à 10,0 pce d'accélérateur primaire). A ce système de vulcanisation viennent optionnellement s'ajouter, divers accélérateurs secondaires ou activateurs de vulcanisation connus tels qu'oxyde de zinc (préférentiellement pour 0,5 à 10,0 pce) ou acide stéarique ou autres (préférentiellement pour 0,5 à 5,0 pce chacun). Le soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à une bande de roulement de pneumatique.
On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-tert-butyl-2-benzothiazyle sulfénamide (en abrégé "TBBS"), N-tert-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.
En revanche, dans les pneumatiques selon l'invention, la composition comprenant l'amine primaire nécessaire aux besoins de l'invention est dépourvue de dérivé guanidique ou en contient moins de 0,3 pce, de manière préférentielle moins de 0,2 pce et très préférentiellement moins de 0,1 pce. Par « dérivé guanidique » on entend les composés organiques portant comme fonction principale une fonction guanidine, tels que ceux connus dans les compositions de pneumatique notamment comme accélérateurs de vulcanisation, par exemple la diphénylguanidine (DPG) ou la diorthotolylguanidine (DOTG).

Selon un mode préférentiel, dans le pneumatique selon l'invention, la composition comprenant l'amine primaire nécessaire aux besoins de l'invention est également dépourvue de zinc ou en contient moins de 0,5 pce, préférentiellement moins de 0,3 pce, plus préférentiellement moins de 0,2 pce et très préférentiellement moins de 0,1 pce.

### I-4 Amine primaire

Afin de remplacer avantageusement les dérivés guanidiques évoqués ci-dessus, le pneumatique selon l'invention comprend une amine primaire de formule (I) :

R-NH₂ (I)

dans laquelle R représente un groupement hydrocarboné linéaire ou ramifié comprenant de 8 à 24 atomes de carbone.

Préférentiellement, R représente un groupement hydrocarboné linéaire ou ramifié comprenant de 10 à 22 atomes de carbone, plus préférentiellement de 12 à 20 atomes de carbone et très préférentiellement de 14 à 20 atomes de carbone. Préférentiellement, R représente un groupement hydrocarboné linéaire.

Par groupement hydrocarboné, on entend au sens de la présente invention, un groupement comportant des atomes de carbone et d'hydrogène, saturé ou insaturé, tel qu'un groupement alkyle ou alkényle. De manière préférentielle, le groupement hydrocarboné comporte de 0 à 3 insaturations, préférentiellement, 0, 1 ou 2.

De manière préférentielle, le groupement hydrocarboné est saturé, il s'agit d'onc d'un groupement alkyle.

Alternativement, et préférentiellement également, ce groupement hydrocarboné est insaturé, il s'agit donc d'un groupement alkényle.

Préférentiellement, l'amine primaire telle que définie ci-dessus peut être choisie parmi les alkylamines linéaires. De manière très préférentielle, il s'agit de l'hexadécylamine ou de l'octadécylamine, et notamment de l'octadécylamine.

L'octadécylamine (ou stéarylamine) est commercialement disponible, par exemple sous forme de poudre chez un fournisseur comme Aldrich.

Préférentiellement, le taux d'amine primaire dans la composition est compris dans un domaine variant de 0,2 à 8 pce, plus préférentiellement de 0,3 à 7 pce, de préférence de plus de 0,5 pce à 5 pce et plus préférentiellement de 0,6 à 4 pce.

On peut noter que l'amine primaire telle que définie ci-dessous est introduite sous forme de base libre, c'est-à-dire ne formant pas un sel avec un acide minéral ou organique.

### I-5 Autres additifs possibles

Les compositions de caoutchouc conformes à l'invention comportent optionnellement également tout ou partie des additifs usuels habituellement utilisés dans les compositions d'élastomères destinées notamment à la fabrication de bandes de roulement, comme par exemple des pigments, des agents de protection tels que cires anti-ozone, anti-ozonants chimiques, anti-oxydants, des agents plastifiants tels que ceux proposés ci-après, des agents anti-fatigue, des résines renforçantes, des accepteurs (par exemple résine phénolique novolaque) ou des donneurs de méthylène (par exemple HMT ou H3M).

Selon un mode de réalisation préférentiel, la composition selon l'invention comporte en outre un agent plastifiant. De préférence cet agent plastifiant est une résine hydrocarbonée solide (ou résine plastifiante), une huile d'extension (ou huile plastifiante), ou un mélange des deux.

Lorsqu'il est inclus dans la composition, le taux d'agent plastifiant total est préférentiellement supérieur ou égal à 5 pce, plus préférentiellement de 5 à 100 pce, en particulier de 10 à 80 pce, par exemple de 15 à 70 pce.

Selon un premier mode de réalisation préférentiel de l'invention, le plastifiant est une huile d'extension liquide à 20 °C, dit à « basse Tg », c'est-à-dire qui par définition présente une Tg inférieure à -20 °C, de préférence inférieure à -40 °C.

Toute huile d'extension, qu'elle soit de nature aromatique ou non-aromatique connue pour ses propriétés plastifiantes vis-à-vis d'élastomères diéniques, est utilisable. A température ambiante (20°C), ces huiles, plus ou moins visqueuses, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les huiles d'extension choisies dans le groupe constitué par les huiles naphténiques (à basse ou haute viscosité, notamment hydrogénées ou non), les huiles paraffiniques, les huiles MES (*Medium Extracted Solvates*), les huiles TDAE (*Treated Distillate Aromatic Extracts*), les huiles minérales, les huiles végétales, les plastifiants éthers, les plastifiants esters, les plastifiants phosphates, les plastifiants sulfonates et les mélanges de ces composés. Par exemple, on peut citer ceux qui contiennent entre 12 et 30 atomes de carbone, par exemple le trioctyle phosphate. A titre d'exemples de plastifiants esters non aqueux et non hydrosolubles, on peut citer notamment les composés choisis dans le groupe constitué par les trimellitates, les pyromellitates, les phtalates, les 1,2-cyclohexane dicarboxylates, les adipates, les azélaates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en C₁₈, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Préférentiellement, le taux d'huile d'extension est compris entre 2 et 50 pce, plus préférentiellement entre 3 et 40 pce, encore plus préférentiellement entre 5 et 35 pce.

Selon un autre mode de réalisation préférentiel de l'invention, cet agent plastifiant est une résine hydrocarbonée thermoplastique dont la Tg est supérieure à 0°C, de préférence supérieure à 20°C. Cette résine est un solide à température ambiante (23°C), par opposition à un composé plastifiant liquide tel qu'une huile.

De préférence, la résine plastifiante hydrocarbonée thermoplastique présente au moins une quelconque des caractéristiques suivantes :
- une Tg supérieure à 20°C, plus préférentiellement supérieure à 30°C ;
- une masse moléculaire moyenne en nombre (Mn) comprise entre 400 et 2000 g/mol, plus préférentiellement entre 500 et 1500 g/mol ;
- un indice de polymolécularité (Ip) inférieur à 3, plus préférentiellement inférieur à 2 (rappel : Ip = Mw/Mn avec Mw masse moléculaire moyenne en poids).

Plus préférentiellement, cette résine plastifiante hydrocarbonée thermoplastique présente l'ensemble des caractéristiques préférentielles ci-dessus.

La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines hydrocarbonées thermoplastiques peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

A titre de monomères aromatiques conviennent par exemple le styrène, l'alpha-méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C₉ (ou plus généralement d'une coupe C₈ à C₁₀). De préférence, le monomère vinylaromatique est du styrène ou un monomère vinylaromatique issu d'une coupe C₉ (ou plus généralement d'une coupe C₈ à C₁₀). De préférence, le monomère vinylaromatique est le monomère minoritaire, exprimé en fraction molaire, dans le copolymère considéré.

Selon un mode de réalisation particulièrement préférentiel, la résine plastifiante hydrocarbonée est choisie dans le groupe constitué par les résines d'homopolymères ou copolymères de cyclopentadiène (en abrégé CPD) ou dicyclopentadiène (en abrégé DCPD), les résines d'homopolymères ou copolymères terpène, les résines d'homopolymères ou copolymères terpène phénol, les résines d'homopolymères ou copolymères de coupe C5, les résines d'homopolymères ou copolymères de coupe C9, les résines d'homopolymères et copolymères d'alpha-méthyl-styrène et les mélanges de ces résines, utilisables seules ou en combinaison avec un plastifiant liquide, par exemple une huile MES ou TDAE. Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. Parmi les résines plastifiantes hydrocarbonées ci-dessus, on citera notamment les résines d'homo- ou copolymères d'alphapinène, betapinène, dipentène ou polylimonène.

Les résines préférentielles ci-dessus sont bien connues de l'homme du métier et disponibles commercialement, par exemple vendues en ce qui concerne les :
- résines polylimonène : par la société DRT sous la dénomination "Dercolyte L120" (Mn=625 g/mol ; Mw=1010 g/mol ; lp=1,6 ; Tg=72°C) ou par la société ARIZONA sous la dénomination "Sylvagum TR7125C" (Mn=630 g/mol ; Mw=950 g/mol ; Ip=1,5 ; Tg=70°C) ;
- résines de copolymère coupe C₅/ vinylaromatique, notamment coupe C₅/ styrène ou coupe C₅/ coupe C₉ : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "Escorez 1273" ;
- résines de copolymère limonène/ styrène : par DRT sous dénomination "Dercolyte TS 105" de la société DRT, par ARIZONA Chemical Company sous dénominations "ZT115LT" et "ZT5100".

A titre d'exemples d'autres résines préférentielles, on peut citer également les résines alpha-méthyl-styrène modifiées phénol. Pour caractériser ces résines modifiées phénol, on rappelle qu'il est utilisé de manière connue un indice dit "indice hydroxyle" (mesuré selon norme ISO 4326 et exprimé en mg KOH/g). Les résines alpha-méthyl-styrène, notamment celles modifiées phénol, sont bien connues de l'homme du métier et disponibles commercialement, par exemple vendues par la société Arizona Chemical sous les dénominations "Sylvares SA 100" (Mn = 660 g/mol ; Ip = 1,5 ; Tg = 53°C) ; "Sylvares SA 120" (Mn = 1030 g/mol ; Ip = 1,9 ; Tg = 64°C) ; "Sylvares 540" (Mn = 620 g/mol ; Ip = 1,3 ; Tg = 36°C ; indice d'hydroxyle = 56 mg KOH/g) ; "Silvares 600" (Mn = 850 g/mol ; Ip = 1,4 ; Tg = 50°C ; indice d'hydroxyle = 31 mg KOH/g).

Selon un mode particulier de réalisation de l'invention, lorsqu'elle est incluse dans la composition, le taux de résine plastifiante hydrocarbonée est compris entre 5 et 50 pce, préférentiellement entre 7 et 40 pce, encore plus préférentiellement entre 10 et 35 pce. Préférentiellement également, le taux de résine plastifiante est compris entre 5 et 20 pce, et plus préférentiellement entre 5 et 15 pce.

Bien entendu, les compositions conformes à l'invention peuvent être utilisées seules ou en coupage (i.e., en mélange) avec toute autre composition de caoutchouc utilisable pour la fabrication de pneumatiques.

Il va de soi que l'invention concerne les compositions de caoutchouc précédemment décrites tant à l'état dit "cru" ou non réticulé (i.e., avant cuisson) qu'à l'état dit "cuit" ou réticulé, ou encore vulcanisé (i.e., après réticulation ou vulcanisation).

### II- Préparation des compositions de caoutchouc

Les compositions sont fabriquées dans des mélangeurs appropriés, en utilisant deux phases de préparation successives bien connues de l'homme du métier: une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une deuxième phase de travail mécanique (parfois qualifiée de phase "productive") à plus basse température, typiquement inférieure à 110°C, par exemple entre 60°C et 100°C, phase de finition au cours de laquelle est incorporé le système de réticulation ou vulcanisation; de telles phases ont été décrites par exemple dans les demandes EP-A-0501227, EP-A-0735088, EP-A-0810258, WO00/05300 ou WO00/05301.

La première phase (non-productive) est conduite préférentiellement en plusieurs étapes thermomécaniques. Au cours d'une première étape on introduit, dans un mélangeur approprié tel qu'un mélangeur interne usuel, les élastomères et les charges renforçantes (et éventuellement les agents de couplage et/ou d'autres ingrédients), à une température comprise entre 20°C et 100°C et, de préférence, entre 25°C et 100°C. Après quelques minutes, préférentiellement de 0,5 à 2 min et une montée de la température à 90°C à 100°C, les autres ingrédients (c'est-à-dire, ceux qui restent si tous n'ont pas été mis au départ) sont ajoutés en une fois ou par parties, à l'exception du système de réticulation durant un mélangeage allant de 20 secondes à quelques minutes. La durée totale du malaxage, dans cette phase non-productive, est de préférence comprise entre 2 et 10 minutes à une température inférieure ou égale à 180°C, et préférentiellement inférieure ou égale à 170°C.

Après refroidissement du mélange ainsi obtenu, on incorpore alors le système de vulcanisation à basse température (typiquement inférieure à 100°C), généralement dans un mélangeur externe tel qu'un mélangeur à cylindres; le tout est alors mélangé (phase productive) pendant quelques minutes, par exemple entre 5 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis afin d'obtenir des produits tels que flancs, nappe carcasse, nappes sommet (ou ceinture de pneumatique), bande de roulement, bourrage tringle, sous-couche de bande de roulement ou d'autres couches d'élastomères, préférentiellement la bande de roulement. Ces produits peuvent ensuite être utilisés pour la fabrication de pneumatiques, selon les techniques connues de l'homme du métier.

La vulcanisation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de vulcanisation adopté, de la cinétique de vulcanisation de la composition considérée ou encore de la taille du pneumatique.

Les exemples qui suivent illustrent l'invention sans toutefois la limiter.

### III- Exemples de réalisation de l'invention

### 111-1 Préparation des exemples

Dans les exemples qui suivent les compositions caoutchouteuses ont été réalisées comme décrit précédemment.

### III-2 Caractérisation des exemples

Dans les exemples, les compositions de caoutchouc sont caractérisées avant et/ou après cuisson comme indiqué ci-après.

### - Viscosité Moonev ou Plasticité Moonev (avant cuisson):

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre). Pour plus de lisibilité les résultats seront indiqués en base 100, la valeur 100 étant attribuée au témoin. Un résultat inférieur à 100 indiquant une diminution de la valeur concernée, et inversement, un résultat supérieur à 100, indiquera une augmentation de la valeur concernée.

### -Essais de traction (après cuisson) :

Ces essais permettent de déterminer les contraintes d'élasticité et les propriétés à la rupture. Sauf indication différente, ils sont basés sur la norme NF ISO 37 de décembre 2005. On mesure en seconde élongation (i.e. après un cycle d'accommodation) les modules sécants dits "nominaux" (ou contraintes apparentes, en MPa, rapportées à la déformation, sans unité) à 100% d'allongement ("MA100"). Toutes ces mesures de traction sont effectuées dans les conditions normales de température (23±2°C) et d'hygrométrie (50±10% d'humidité relative). On mesure également les contraintes à la rupture (en MPa) et les allongements à la rupture (en %). Pour plus de lisibilité les résultats seront indiqués en base 100, la valeur 100 étant attribuée au témoin. Un résultat inférieur à 100 indiquant une diminution de la valeur concernée, et inversement, un résultat supérieur à 100, indiquera une augmentation de la valeur concernée.

### - Propriétés dynamiques (après cuisson):

Les propriétés dynamiques G* et tan(δ)max sont mesurées sur un viscoanalyseur (Metravib V A4000), selon la norme ASTM D 5992 - 96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température selon la norme ASTM D 1349 - 99. On effectue un balayage en amplitude de déformation crête à crête de 0,1 à 50% (cycle aller), puis de 50% à 1 % (cycle retour). Le résultat exploité est le facteur de perte, tan(δ). Pour le cycle retour, on indique la valeur maximale de tan(δ) observée (tan(δ)max). Les valeurs de tan(δ)max données ci-après sont mesurées à 23°C. Pour plus de lisibilité les résultats seront indiqués en base 100, la valeur 100 étant attribuée au témoin. Un résultat inférieur à 100 indiquant une diminution de la valeur concernée, et inversement, un résultat supérieur à 100, indiquera une augmentation de la valeur concernée.

### III-3 Exemples

### III-3-1 Exemple I

Cet exemple a pour objet de comparer les différentes propriétés de caoutchouterie d'une composition témoin à des compositions conformes à l'invention, c'est-à-dire comprenant un élastomère diénique, une charge renforçante comprenant majoritairement de la silice, un système de réticulation, dépourvue ou contenant moins de 0,5 pce de dérivé guanidique et comprenant une amine primaire de formule (I) telle que définie précédemment.

Notamment les compositions C-1 à C-3 ont été préparées et testées. La formule des compositions C-1 et C-2 ne varie que par le remplacement de la DPG par l'octadécylamine (dans une quantité isomolaire), comme présenté dans le tableau 1. La composition C-3, quant à elle est identique à la composition C-2 dans laquelle l'oxyde de zinc a été supprimé. Les compositions C-2 et C-3, conformes à l'invention, sont comparées à la composition témoin C-1.

**Tableau 1**

| **Composition** | **C-1** | **C-2** | **C-3** |
|---|---|---|---|
| SBR (1) | 100 | 100 | 100 |
| Noir de carbone (2) | 3 | 3 | 3 |
| Silice (3) | 110 | 110 | 110 |
| Agent de couplage (4) | 9 | 9 | 9 |
| Antioxydant (5) | 2 | 2 | 2 |
| Huile plastifiante (6) | 12 | 12 | 12 |
| Résine plastifiante (7) | 46 | 46 | 46 |
| Oxyde de zinc | 1,2 | 1,2 | 0 |
| DPG (8) | 1,8 | 0 | 0 |
| Octadécylamine | 0 | 2,3 | 2,3 |
| Acide stéarique | 2 | 2 | 2 |
| Accélérateur (9) | 2,3 | 2,3 | 2,3 |
| Soufre | 1 | 1 | 1 |

| | | | |
|---|---|---|---|
| (1) SBR (étoilé Sn) avec 27% de motif styrène et 24% de motif 1,2 de la partie butadiénique (Tg = -48°C) porteur d'une fonction silanol en extrémité de la chaîne élastomère (2) Grade ASTM N234 (société Cabot) (3) Silice « Zeosil 1165 MP » de la société Rhodia type « HDS » (4) Agent de couplage : TESPT (« Si69 » de la société Evonik - Degussa) (5) N-(1,3-diméthylbutyl)-N'-phényl-p-phénylènediamine (Santoflex 6-PPD) de la société Flexsys (6) Huile de tournesol à 85 % en poids d'acide oléique « Lubrirob Tod 1880 » de la société Novance (7) Résine C5/C9 « Escorez 1273 » de la société Exxon (8) Diphénylguanidine (« Perkacit » DPG de la société Flexsys) (9) N-cyclohexyl-2-benzothiazol-sulfénamide (« Santocure CBS » de la société Flexsys) | | | |

Les compositions sont fabriquées avec une introduction de l'ensemble des constituants sur un mélangeur interne, à l'exception du système de vulcanisation. Les agents de vulcanisation (soufre et accélérateur) sont introduits sur un mélangeur externe à basse température (les cylindres constitutifs du mélangeur étant à environ 30°C).

Le tableau 2 ci-dessous donne les propriétés mesurées avant et après cuisson. Pour une meilleure compréhension et comparaison des essais, les résultats sont donnés en base 100, c'est-à-dire que la valeur expérimentale pour le témoin est ramenée à la valeur 100 puis les valeurs des essais sont données en fonction de cette base de 100 pour le témoin.

**Tableau 2**

| **Composition N°** | **C-1** | **C-2** | **C-3** |
|---|---|---|---|
| Mooney (en base 100) | 100 | 94 | 99 |
| MA100 (en base 100) | 100 | 93 | 106 |
| Tan (δ) max (en base 100) | 100 | 85 | 85 |

Par rapport à la composition témoin C-1, on constate pour les compositions C-2 et C-3 conformes à l'invention, une baisse significative de 15% de l'hystérèse sur l'indicateur Tan (δ) max, qui s'accompagne de propriétés par ailleurs similaires voire améliorées.

### III-3-2 Exemple II

Cet exemple a pour objet de comparer les différentes propriétés de caoutchouterie d'une composition témoin à une composition conforme à l'invention, c'est-à-dire comprenant un élastomère diénique, une charge renforçante comprenant majoritairement de la silice, un système de réticulation, dépourvue ou contenant moins de 0,5 pce de dérivé guanidique et comprenant une amine primaire de formule (I) telle que définie précédemment, dans le cas de l'utilisation d'un agent de couplage différent de celui de l'exemple précédent.

Les compositions C-4 et C-5 ont été préparées et testées. La formule des compositions C-4 et C-5 ne varie que par le remplacement de la DPG par l'octadécylamine (dans une quantité isomolaire), comme présenté dans le tableau 3.

**Tableau 3**

| **Composition** | **C-4** | **C-5** |
|---|---|---|
| SBR (1) | 100 | 100 |
| Noir de carbone (2) | 3 | 3 |
| Silice (3) | 110 | 110 |
| Agent de couplage (4) | 6,5 | 6,5 |
| Antioxydant (5) | 2 | 2 |
| Huile plastifiante (6) | 12 | 12 |
| Résine plastifiante (7) | 46 | 46 |
| Oxyde de zinc | 0 | 0 |
| DPG (8) | 1,8 | 0 |
| Octadécylamine | 0 | 2,3 |
| Acide stéarique | 2 | 2 |
| Accélérateur (9) | 2,3 | 2,3 |
| Soufre | 1 | 1 |

| | | |
|---|---|---|
| (1) SBR avec 27% de motif styrène et 24% de motif 1,2 de la partie butadiénique (Tg = -48°C) porteur d'une fonction silanol (2) Grade ASTM N234 (société Cabot) (3) Silice « Zeosil 1165 MP » de la société Rhodia type « HDS » (4) Agent de couplage : polysulfure de bis- (propyldiméthylsilanol) tel que décrit dans le document WO 02/31041 (ou US 2004/051210) (5) N-(1,3-diméthylbutyl)-N'-phényl-p-phénylènediamine (Santoflex 6-PPD) de la société Flexsys (6) Huile de tournesol à 85 % en poids d'acide oléique « Lubrirob Tod 1880 » de la société Novance (7) Résine C5/C9 « Escorez 1273 » de la société Exxon (8) Diphénylguanidine (« Perkacit » DPG de la société Flexsys) (9) N-cyclohexyl-2-benzothiazol-sulfénamide (« Santocure CBS » de la société Flexsys) | | |

Les compositions sont fabriquées avec une introduction de l'ensemble des constituants sur un mélangeur interne, à l'exception du système de vulcanisation. Les agents de vulcanisation (soufre et accélérateur) sont introduits sur un mélangeur externe à basse température (les cylindres constitutifs du mélangeur étant à environ 30°C).

Le tableau 4 ci-dessous donne les propriétés mesurées avant et après cuisson. Pour une meilleure compréhension et comparaison des essais, les résultats sont donnés en base 100, c'est-à-dire que la valeur expérimentale pour le témoin est ramenée à la valeur 100 puis les valeurs des essais sont données en fonction de cette base de 100 pour le témoin.

**Tableau 4**

| **Composition N°** | **C-4** | **C-5** |
|---|---|---|
| Mooney (en base 100) | 100 | 99 |
| MA100 (en base 100) | 100 | 80 |
| Tan (δ) max (en base 100) | 100 | 92 |

Par rapport à la composition témoin C-4, on constate pour la composition C-5 conforme à l'invention, une baisse significative de 8% de l'hystérèse sur l'indicateur Tan (δ) max, qui s'accompagne de propriétés par ailleurs similaires voire améliorées.

## Revendications

1. Pneumatique comprenant une composition de caoutchouc à base d'au moins un élastomère diénique, une charge renforçante composée majoritairement de silice, et un système de réticulation, ladite composition étant dépourvue ou comprenant moins de 0,3 pce de dérivé guanidique et comprenant en outre une amine primaire de formule (I):
R-NH₂ (I)
dans laquelle R représente un groupement hydrocarboné linéaire ou ramifié comprenant de 8 à 24 atomes de carbone.

2. Pneumatique selon la revendication 1 dans lequel le taux d'amine primaire est de 0,2 à 8 pce, de préférence de plus de 0,3 pce à 7 pce.

3. Pneumatique selon l'une quelconque des revendications précédentes dans lequel l'amine primaire de formule (I) porte un radical R qui représente un groupement hydrocarboné comprenant de 10 à 22 atomes de carbone.

4. Pneumatique selon l'une quelconque des revendications précédentes dans lequel l'amine primaire de formule (I) porte un radical R qui représente un groupement hydrocarboné linéaire.

5. Pneumatique selon l'une des revendications précédentes dans lequel le taux de silice est de 30 à 150 pce.

6. Pneumatique selon l'une quelconque des revendications précédentes dans lequel l'élastomère diénique est choisi dans le groupe constitué par les polybutadiènes, les polyisoprènes de synthèse, le caoutchouc naturel, les copolymères de butadiène, les copolymères d'isoprène et les mélanges de ces élastomères.

7. Pneumatique selon l'une quelconque des revendications précédentes dans lequel l'élastomère diénique est composé majoritairement d'élastomère diénique non isoprénique.

8. Pneumatique selon la revendication 7 dans lequel l'élastomère diénique est composé de 100 pce d'élastomère diénique non isoprénique.

9. Pneumatique selon l'une des revendications précédentes dans lequel la composition comprend en outre un plastifiant, de préférence choisi parmi les résines plastifiantes, les huiles d'extension et leurs mélanges.

10. Pneumatique selon l'une des revendications précédentes dans lequel la composition est en outre dépourvue de zinc ou en contient moins de 0,5 pce, préférentiellement moins de 0,3 pce.

11. Pneumatique selon l'une des revendications précédentes comprenant en outre un agent de couplage.

12. Pneumatique selon la revendication 11 dans lequel l'agent de couplage est un polysulfure d'hydroxysilane répondant à la formule générale (III) :
(HO)ₐR₍₃₋ₐ₎Si-R'-Sₓ-R'-SiR_{(3-b)}(OH)_{b} (III)
dans laquelle :
- les radicaux R, identiques ou différents, sont des groupes hydrocarbonés comportant de préférence de 1 à 15 atomes de carbone;
- les radicaux R', identiques ou différents, sont des groupes de liaison divalents comportant de préférence de 1 à 18 atomes de carbone;
a et b, identiques ou différents, sont égaux à 1 ou 2;
- x est un nombre supérieur ou égal à 2.

13. Pneumatique selon la revendication 12 dans lequel l'agent de couplage est un mono-hydroxysilane dans lequel a et b sont égaux à 1.

14. Pneumatique selon l'une des revendications précédentes dans lequel la composition comprenant l'amine primaire est la composition d'une couche de pneumatique choisie dans le groupe constitué de tout ou partie de la bande de roulement, de tout ou partie de la ceinture de pneumatique et leurs combinaisons.

15. Pneumatique selon la revendication 14 dans lequel la composition comprenant l'amine primaire est celle de tout ou partie de la bande de roulement.

## Patentansprüche

1. Luftreifen, der eine Kautschukzusammensetzung auf Basis eines Dienelastomers, eines hauptsächlich aus Siliciumdioxid zusammengesetzten Verstärkungsfüllstoffs sowie eines Vernetzungssystems umfasst, wobei die Zusammensetzung kein oder weniger als 0,3 phr Guanidinderivat umfasst und ferner ein primäres Amin mit der Formel (I) umfasst:
R-NH₂ (I)
wobei R einen unverzweigten oder verzweigten Kohlenwasserstoffrest mit 8 bis 24 Kohlenstoffatomen darstellt.

2. Luftreifen nach Anspruch 1, wobei der Anteil von primärem Amin zwischen 0,2 und 8 phr, bevorzugt zwischen mehr als 0,3 phr und 7 phr liegt.

3. Luftreifen nach einem der vorhergehenden Ansprüche, wobei das primäre Amin mit der Formel (I) einen Rest R trägt, der einen Kohlenwasserstoffrest mit 10 bis 22 Kohlenstoffatomen darstellt.

4. Luftreifen nach einem der vorhergehenden Ansprüche, wobei das primäre Amin mit der Formel (I) einen Rest R trägt, der einen unverzweigten Kohlenwasserstoffrest darstellt.

5. Luftreifen nach einem der vorhergehenden Ansprüche, wobei der Anteil von Siliciumdioxid zwischen 30 und 150 phr beträgt.

6. Luftreifen nach einem der vorhergehenden Ansprüche, wobei das Dienelastomer aus der Gruppe ausgewählt ist, die von Polybutadienen, synthetischen Polyisoprenen, Naturkautschuk, Butadien-Copolymeren, Isopren-Copolymeren und Mischungen aus diesen Elastomeren gebildet wird.

7. Luftreifen nach einem der vorhergehenden Ansprüche, wobei das Dienelastomer hauptsächlich aus einem Nicht-Isopren-Dienelastomer zusammengesetzt ist.

8. Luftreifen nach Anspruch 7, wobei das Dienelastomer aus 100 phr Nicht-Isopren-Dienelastomer zusammengesetzt ist.

9. Luftreifen nach einem der vorhergehenden Ansprüche, wobei die Zusammensetzung ferner einen Weichmacher umfasst, der vorzugsweise aus Weichmacherharzen, Streckölen und ihren Mischungen ausgewählt ist.

10. Luftreifen nach einem der vorhergehenden Ansprüche, wobei die Zusammensetzung ferner kein Zink aufweist oder weniger als 0,5 phr, vorzugsweise weniger als 0,3 phr davon enthält.

11. Luftreifen nach einem der vorhergehenden Ansprüche, der ferner ein Kopplungsmittel umfasst.

12. Luftreifen nach Anspruch 11, wobei das Kopplungsmittel ein Hydroxysilan-Polysulfid ist, das der allgemeinen Formel (III) entspricht:
(HO)ₐR₍₃₋ₐ₎Si-R'-Sₓ-R'-SiR_{(3-b)}(OH)_{b} (III)
wobei:
- die Reste R, die gleich oder verschieden sind, Kohlenwasserstoffgruppen mit vorzugsweise 1 bis 15 Kohlenstoffatomen sind;
- die Reste R', die gleich oder verschieden sind, zweiwertige Verbindungsgruppen mit vorzugsweise 1 bis 18 Kohlenstoffatomen sind;
a und b, die gleich oder verschieden sind, gleich 1 oder 2 sind;
- x eine Zahl größer gleich 2 ist.

13. Luftreifen nach Anspruch 12, wobei das Kopplungsmittel ein Monohydroxysilan ist, bei dem a und b gleich 1 sind.

14. Luftreifen nach einem der vorhergehenden Ansprüche, wobei die Zusammensetzung, die das primäre Amin umfasst, die Zusammensetzung einer Luftreifenschicht ist, die aus der gesamten oder einem Teil der Lauffläche, aus dem gesamten oder einem Teil des Reifengürtels und ihren Kombinationen ausgewählt ist.

15. Luftreifen nach Anspruch 14, wobei die Zusammensetzung, die das primäre Amin umfasst, die Zusammensetzung der gesamten oder eines Teils der Lauffläche ist.

## Claims

1. Tyre comprising a rubber composition based on at least one diene elastomer, a reinforcing filler predominantly composed of silica and a crosslinking system, the said composition being devoid of or comprising less than 0.3 phr of guanidine derivative and additionally comprising a primary amine of formula (I):
R-NH₂ (I)
in which R represents a linear or branched hydrocarbon group comprising from 8 to 24 carbon atoms.

2. Tyre according to Claim 1, in which the content of primary amine is from 0.2 to 8 phr, preferably from more than 0.3 phr to 7 phr.

3. Tyre according to either one of the preceding claims, in which the primary amine of formula (I) bears an R radical which represents a hydrocarbon group comprising from 10 to 22 carbon atoms.

4. Tyre according to any one of the preceding claims, in which the primary amine of formula (I) bears an R radical which represents a linear hydrocarbon group.

5. Tyre according to one of the preceding claims, in which the silica content is from 30 to 150 phr.

6. Tyre according to any one of the preceding claims, in which the diene elastomer is selected from the group consisting of polybutadienes, synthetic polyisoprenes, natural rubber, butadiene copolymers, isoprene copolymers and the mixtures of these elastomers.

7. Tyre according to any one of the preceding claims, in which the diene elastomer is predominately composed of non-isoprene diene elastomer.

8. Tyre according to Claim 7, in which the diene elastomer is composed of 100 phr of non-isoprene diene elastomer.

9. Tyre according to one of the preceding claims, in which the composition additionally comprises a plasticizer preferably chosen from plasticizing resins, extending oils and their mixtures.

10. Tyre according to one of the preceding claims, in which the composition is in addition devoid of zinc or comprises less than 0.5 phr, preferably less than 0.3 phr, thereof.

11. Tyre according to one of the preceding claims, additionally comprising a coupling agent.

12. Tyre according to Claim 11, in which the coupling agent is a hydroxysilane polysulphide corresponding to the general formula (III):
(HO)ₐR₍₃₋ₐ₎Si-R'-Sₓ-R'-SiR_{(3-b)}(OH)_{b} (III)
in which:
- the R radicals, which are identical or different, are hydrocarbon groups preferably comprising from 1 to 15 carbon atoms;
- the R' radicals, which are identical or different, are divalent connecting groups preferably comprising from 1 to 18 carbon atoms;
- a and b, which are identical or different, are equal to 1 or 2;
- x is a number greater than or equal to 2.

13. Tyre according to Claim 12, in which the coupling agent is a monohydroxysilane in which a and b are equal to 1.

14. Tyre according to one of the preceding claims, in which the composition comprising the primary amine is the composition of a tyre layer selected from the group consisting of all or part of the tread, of all or part of the tyre belt and their combinations.

15. Tyre according to Claim 14, in which the composition comprising the primary amine is that of all or part of the tread.
